# EUROPÄISCHE PATENTANMELDUNG

(11) **EP 0 833 399 A1**
(43) Veröffentlichungstag der Anmeldung: **01.04.1998**
(21) Anmeldenummer: 97116031.2
(22) Anmeldetag: 15.09.1997
(51) Int. Cl.: H01M 6/36

(54) **Pyrotechnischer elektrischer Generator**

(30) Priorität: 20.09.1996 DE 19638628
(71) Anmelder: R-Amtech International, Inc., Bellevue, Washington 98004 (US)
(72) Erfinder: Prosyanyuk, Vyatcheslav Vasil'evitch, 141300 Moskovskaya oblast, Sergiev Posad (RU); Suvorov, Ivan Stepanovitch, 141300 Moskovskaya oblast, Sergiev Posad (RU); Yemel'Yanov, Valeriy Nilovitch, 141300 Moskovskaya oblast, Sergiev Posad (RU); Sidorov, Alexey Ivanovitch, 141300 Moskovskaya oblast, Sergiev Posad (RU)
(74) Vertreter: von Füner, Alexander, Dr.

(57) **Zusammenfassung**

Die Erfindung betrifft einen pyrotechnischen elektrischen Generator, bestehend aus durch einen Separator getrennte Anode und Kathode aus pyrotechnischen Ladungen mit einem Überschuß an Brennstoff-Anode und einem Überschuß an Oxidationsmittel-Kathode, der dadurch gekennzeichnet ist, daß Anode, Kathode und Separator ein Bindemittel-Asbest enthalten und mit einem Verhältnis von maximaler Größe zur Dicke von 20 bis 130 ausgeführt sind, wobei der Brennstoff in der Anode und in der Kathode Zirkonium ist, und der Separator aus Lithiumfluorid, Erdalkalifluorid oder deren Mischung ausgeführt ist.

## Beschreibung

Die Erfindung betrifft eine Vorrichtung zur Umwandlung von chemischer Energie einer exothermen Masse in elektrische Energie, z.B. Hochtemperatur-Vorratsquellen für Gleichstrom, die im Betrieb auf Wartestellung und zur autarken Speisung von Bordapparaturen bestimmt sind, für Vorrichtungen und Apparaturen (Heizungsbrücken, Pyroenergiegeber, Mikrotriebwerke, Relais und dergleichen), die in der Automatik verschiedener Systeme verwendet werden, darunter zum Einschalten von Feuerlöschapparaten, Signalapparaturen, Warnvorrichtungen, Blockiervorrichtung und dergleichen).

Aus der Patent- und wissenschaftlichen Literatur sind primäre Vorratsstromquellen unter Anwendung von pyrotechnischen Ladungen bekannt (Bagozki W.S., Skundin A.M., Chemische Stromquellen, M. Energoizdad, 1981, S. 304-310; Crompton T., Primäre Stromquellen, N.: Mir 1986, S. 295, 328 u.a.), die jedoch in ihrer Konstruktion kompliziert sind und die lange Anlaufzeiten benötigen, da die Entwicklung des elektrischen Stromes in diesen Vorrichtungen nur nach dem Abbrennen der pyrotechnischen Ladung möglich ist (Pyroerwärmer). Dies gewährleistet das Schmelzen des festen Elektrolyten (Salze oder Salzmischungen), der zwischen Anode und Kathode angeordnet ist, und die Erwärmung beider Elektroden auf Arbeitstemperatur. Die Aktivierungszeit der Vorratsquelle wird verringert, weil das Aufwärmelement unmittelbar in das elektrochemische Element eingebracht ist. Die oben genannte konstruktive Lösung der Vorrichtung (Kukots F.I. u.a. Wärmestromquellen, Rostow-am-Don Verlag Universität 1989, S. 61-63) schließt praktisch den Bau einer Batterie aus den Stromerzeugungsteilen aus, wobei jedoch nur die Batterien eine praktische Bedeutung besitzen (Stromerzeugungsvorrichtung) mit Spannungen von 9-12 V und höher.

Außerdem macht das Vorhandensein von pyrotechnischen und elektrochemischen Bauteilen es notwendig, diese getrennt herzustellen wegen der Brand- und Explosionssicherheit, unter Einhaltung bestimmter Regeln für die technologischen Prozesse, was ihre Herstellung erschwert. Außerdem ist die Anwendung der oben genannten Stromquellen in Systemen für kurzzeitige und Impulsspeisung ökonomisch unvorteilhaft.

Die DE-OS 2046144 beschreibt ein thermisch aktivierbares galvanisches Primärelement nach dem System Calcium/Lithium-Kaliumchlorid/Calciumchromat mit zwei aussenliegenden positiven Elektroden und einer innenliegenden negativen Elektrode und einem Heizsatz, wobei die Elektroden und die Elektrolytschicht in Dünnschichtbauweise ausgeführt sind und die Dicke des Elements senkrecht zu den Elektrodenflächen etwa 1,6 - 2,0 mm und nicht größer als 2,5 mm ist.
Dabei haben die positiven Elektroden des Elements vorzugsweise aus einem feinmaschigen Nickeldraht bestehende Stromableiter, in welche die positive Masse, bestehend aus Calciumchromat und einem Gemisch von Lithiumchlorid und Kaliumchlorid, eingeschmolzen ist.
Die negative Elektrode des Elements besteht vorzugsweise aus einem Drahtnetz oder grobperforiertem Blech aus Nickel, auf das beidseitig Calciummetallschichten aufgepreßt sind.

In der russischen Anmeldung N94013374/02 (013252) ist ein pyrotechnischer Impulsstromgenerator beschrieben, der aus zwei Elektroden besteht, die als dünne Halbladung aus pyrotechnischen Massen mit dem Verhältnis des Durchmessers zur Höhe von 30-80 besteht. Der grundlegende Nachteil dieser Vorrichtung ist die kurze Generierungszeit (Impuls nicht länger als 1,0 s), was die Anwendungsbreite wesentlich beschränkt.

Der nächstkommende Stand der Technik ist im russischen Patent N2018782 beschrieben, in dem beide Elektroden als gepreßte pyrotechnische Ladungen ausgeführt sind (Halbladung) mit einem Verhältnis von Durchmesser zur Höhe jeder Halbladung gleich 2,0-2,5. Dabei ist die Anode als pyrotechnische Ladung mit einem Überschuß an Brennstoff und die Kathode mit einem Überschuß an Oxidationsmittel und der Separator, der die Anode und Kathode trennt, aus einem porösen Dielektrikum ausgeführt. Die Kathode ist aus einem Gemisch aus Bleifluorid, Lithiumfluorid und Aluminiumfluorid, die Anode aus einem Gemisch an Blei-, Magnesium- und Lithiumfluorid hergestellt.

Der grundlegende Nachteil dieser bekannten Lösung ist die lange Zeit zwischen dem Moment des Einschaltens bis zum Moment des Erreichens der maximalen Stromstärke, was durch die geringe Brenngeschwindigkeit der pyrotechnischen Elektroden und der Inertheit des Poren enthaltenden Separators bedingt ist, wobei die Auffüllung der Poren durch den Elektrolyt zur Ionendurchlässigkeit eine beachtliche Zeit erfordert (mehr als 0,5 s). Außerdem ist die bekannte Einrichtung vorgesehen als Ein-Element-Stromquelle.

Aufgabe der vorliegenden Erfindung ist die Bereitstellung eines pyrotechnischen Stromgenerators mit erhöhter Leistungsfähigkeit und schnellerer Wirksamkeit, d.h. mit geringerer Zeitspanne vom Start bis zur Erzielung der maximalen Stromstärke.

Die oben genannte Aufgabe wird wie aus den nachfolgenden Ansprüchen ersichtlich gelöst.

Gegenstand der Erfindung ist ein pyrotechnischer elektrischer Generator aus einer Anode und einer von dieser durch einen Separator getrennten Kathode, wobei die Anode aus einer pyrotechnischen Ladung mit einem Überschuß an Brennstoff und die Kathode aus einer pyrotechnischen Ladung mit einem Überschuß an Oxidationsmittel besteht, wobei Anode, Kathode und Separator als Bindemittel Asbest enthalten und Anode, Kathode und Separator jeweils ein Verhältnis von maximaler Größe zu Dicke von 20 bis 130 aufweisen, wobei der Brennstoff in der Anode und in der Kathode Zirkonium ist, und der Separator aus Lithiumfluorid, Erdalkalifluorid oder deren Gemisch besteht.

Vorzugsweise enthält die Anode die folgenden Bestandteile in den angegebenen Anteilen in Masse-%:

| | |
|---|---|
| Zirkonium | 37-83 |
| Bariumchromat oder Kupferoxid | 15-51 |
| Asbest | 2-12, |

die Kathode die folgenden Bestandteile in den angegebenen Anteilen in Masse-%:

| | |
|---|---|
| Zirkonium | 3-28 |
| Kupferoxid | 60-95 |
| Asbest | 2-12, |

und der Separator die folgenden Bestandteile in den angegebenen Anteilen in Masse-%:

| | |
|---|---|
| Asbest | 3-20 |
| Lithiumfluorid oder Erdalkalifluorid oder deren Gemisch | 80-97, |

wobei der Separator gegebenenfalls zusätzlich Zirkoniumoxid in einer Menge von bis zu 60 Masse-% bezogen auf die Gesamtmasse enthalten kann, wobei das Massenverhältnis von Asbest zu Lithium- oder Erdalkalifluorid dem oben angegebenen Prozentanteilverhältnis entspricht.

Der wesentliche Unterschied zwischen der erfindungsgemäßen Vorrichtung und der bekannten ist das Vorhandensein von Asbest in den Elektroden und des Elektrolyten in den Poren des Separators, sowie das Verhältnis zwischen der maximalen Größe der Anode, Kathode und des Separators zu ihrer Dicke und die neue Zusammensetzung aller Elemente.

In der erfindungsgemäßen Vorrichtung beteiligt sich der Asbest aktiv in den stromerzeugenden Prozessen aufgrund der thermochemischen Einwirkung der Verbrennungsprodukte von Anode und Kathode. Zusammen mit den Fluoriden und Zirkoniumdioxid wird jedoch die Ionendurchlässigkeit zwischen den Elektroden während der Stromerzeugung in der erfindungsgemäßen Vorrichtung gewährleistet und das Herausfließen von flüssigen Produkten verhindert sowie das unerwünschte Kurzschließen der Elektroden und der Elemente der Batterie ausgeschlossen.

Außerdem gewährleistet die Verwendung von Asbest zusammen mit den anderen Bestandteilen die Erzielung des Verhältnisses von maximaler Größe der Anode, Kathode und des Separators zu ihrer Dicke von 20-130 (Bildung von Dünnschichtelementen beliebiger geometrischer Form bei sehr hoher Empfindlichkeit der pyrotechnischen Elektroden auf den Startwärmeimpuls). Alles dies erlaubt die Erhöhung der Kapazität des Generators in den Grenzen der früheren Größe und eine schnelle Wirksamkeit. Ist weniger als 2% Asbest vorhanden, so ist die Haltbarkeit der Ladung und die geforderte Intensität der stromerzeugenden Prozesse nicht mehr gewährleistet. Nimmt man mehr als 12% Asbest, so verringert sich die Brenngeschwindigkeit und der Heizwert der Vorrichtung. Zirkonium ist der Brennstoff und das aktive Material von Anode und Kathode. Kupferoxid und Bariumchromat spielen die Rolle des Oxidationsmittels. Lithium-, Magnesium-, Barium-, Strontium- und Calciumfluoride oder deren Gemische gewährleisten bei einem Verbrennen der pyrotechnischen Elektroden zusammen mit den Produkten der primären Verbrennung die Ionendurchlässigkeit zwischen den kondensierten Resten (Schlacken) der Anode und Kathode.

Bei einem Verhältnis der maximalen Größe der Anode, Kathode und des Separators zu ihrer Dicke von weniger als 20 wächst die Größe der Zellen und der Batterie der Elemente und verringern sich die Ausgangsparameter wegen des Wachsens des inneren Widerstandes. Bei einem Verhältnis von mehr als 130 werden die Vorrichtungen nicht mehr technologisch und verringert sich die Stabilität.

Die erfindungsgemäßen Formulierungen für die Anode und die Kathode gewährleisten die Möglichkeit der Herstellung von dünnschichtigen porösen Ladungen mit hoher Empfindlichkeit zum Startimpuls, was ein schnelles und vollständiges Verbrennen ermöglicht und die Durchführung von elektrochemischen Prozessen zwischen Anode und Kathode. Die Folge davon ist eine schnelle Reaktionszeit, hohe elektrische Charakteristiken und die Möglichkeit der Herstellung von Batterien minimaler Größe mit vielen Elementen. Außerdem ermöglicht die erfindungsgemäße Lösung eine serienmäßige Herstellung auf halbautomatischen Linien mit hoher Leistungsfähigkeit und mit relativ ungefährlichem Schlickerguß (Vakuumniederschlag der Mischung der Bestandteile).

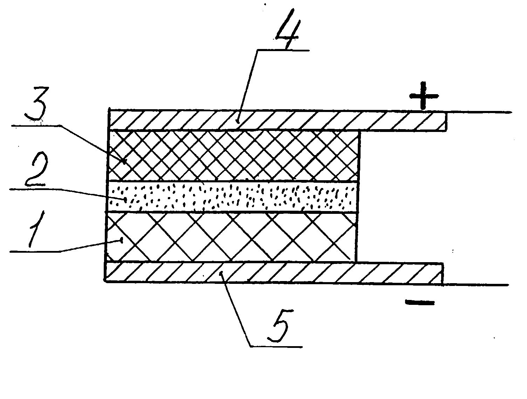

Die erfindungsgemäße Vorrichtung ist in der Figur beschrieben, wobei die Anode 1 und Kathode 3 als dünnschichtige pyrotechnische Ladung (Platinen) ausgebildet sind, die durch einen dünnen Separator 2 von gleicher Größe getrennt sind und zwischen elektrischen Leitungen 4 und 5 angeordnet sind.

Die erfindungsgemäße Vorrichtung arbeitet wie folgt: Mit dem Entflammungsimpuls entzünden sich Anode 1 und Kathode 3, und dank der Konstruktion und der Zusammensetzung der Bauteile beginnt schon im Augenblick der Entzündung der Ladung der Übergang von Elektronen von der äußeren Kette vom Brennstoff (Zirkonium) in der Anode 1 über die Stromabführung 5 an der Anode zur Kathodenleitung 4 und dem Oxidationsmittel (Kupferoxid) in der Kathode 3. Die Befähigung der geladenen Teilchen ist bedingt durch die elektrochemische Oxidation des räumlich getrennten Brennstoffs (Zirkonium in der Anode 1) und der elektrochemischen Reduktion des Oxidationsmittels (Kupferoxid in der Kathode 3) und dem Kontakt dieser Reagenzien durch die Schicht eines ionenleitenden Materials des Separators 2.

Das Verhältnis der maximalen Größe und der Dicke der Anode, der Kathode und des Separators von 20 bis 130, die geringe Dicke der Elektroden und des Separators (0,2-2 mm) und die Zusammensetzung der Bauteile verleiht der Vorrichtung eine schnelle Wirkung und Leistungsfähigkeit sowie einen geringen inneren Widerstand, was es ermöglicht, die Vorrichtung sehr klein zu halten (minimale Größe) sowie ihr Stabilität und andere gute Eigenschaften zu vorleihen.

Als Komponenten wurden Serien-Produkte genommen: Zirkonium TU 48-4-234-84, Bariumchromat GOST 4211-68, Kupferoxid GOST 16539-79, Asbest TU 21-22-3-81, Lithiumfluorid TU 6-01-3529-84, Bariumfluorid TU 6-09-01-261-85, Strontiumfluorid TU 6-09-1434-77, Calciumfluorid TU 6-09-02-572-79 und Magnesiumfluorid TU 6-09-2674-77.

Die Bestandteile entsprechen GOST W84-2072-83, wobei Asbest entsprechend dem Verfahren der Instruktion 3RP-1171-89 erhalten wurde. Zirkonium, Bariumchromat, Kupferoxid und die Metallfluoride wurden als Pulver mit einer Teilchengröße von 100 µm, Asbest mit einer Länge von 0,1-3 mm und einem Durchmesser von 0,001-0,1 mm der Fasern eingesetzt.

Die erfindungsgemäße Vorrichtung kann zur selbständigen Speisung von Bordvorrichtungen, wie Heizbrücken, Pyroenergiegeber, Mikromotoren, Relais und dergleichen eingesetzt werden, wie auch für verschiedene automatische Zwecke, z.B. beim Feuerlöschen, bei der Signalisation, Nachrichten, Blockierung usw. Im Rahmen der Geber können selbständige Geber oder auch Distanzeinschaltung bei der Brandbekämpfung und bei der Information des Erreichens einer kritischen Temperatur in Lagerräumen und in Herstellungsbetrieben erfolgen.

Das Verhältnis der Komponenten beim Stand der Technik und bei der erfindungsgemäßen Vorrichtung sind in der Tabelle 1 bis 3 angegeben.

**Tabelle 1**

| Verhältnis der Komponenten in Masse-% in der Anode | | | | | | | | | | | |
|---|---|---|---|---|---|---|---|---|---|---|---|
| Bezeichnung der Komponenten | Stand der Technik Russ. Pat. N2018782 | Beispiele für die Zusammensetzung der Anode in dem erfindungsgemäßen Generator | | | | | | | | | |
| | | 1 | 2 | 3 | 4 | 5 | 6 | 7 | 8 | 9 | 10 |
| Zirkonium | - | 35 | 37 | 60 | 83 | 85 | 35 | 37 | 60 | 83 | 85 |
| Bariumchromat | - | 52 | 51 | 33 | 15 | 14 | - | - | - | - | - |
| Kupferoxid | - | - | - | - | - | - | 52 | 51 | 33 | 15 | 14 |
| Asbest | - | 13 | 12 | 7 | 2 | 1 | 13 | 12 | 7 | 2 | 1 |
| Magnesium | 22 | - | - | - | - | - | - | - | - | - | - |
| Bleifluorid | 58 | - | - | - | - | - | - | - | - | - | - |
| Lithiumfluorid | 20 | - | - | - | - | - | - | - | - | - | - |

**Tabelle 2**

| Verhältnis der Komponenten in Masse-% in der Kathode | | | | | | |
|---|---|---|---|---|---|---|
| Bezeichnung der Komponenten | Stand der Technik Russ. Pat. N2018782 | Beispiele für die Zusammensetzung der Kathode in dem erfindungsgemäßen Generator | | | | |
| | | 1 | 2 | 3 | 4 | 5 |
| Zirkonium | - | 2 | 3 | 15 | 28 | 30 |
| Kupferoxid | - | 97 | 95 | 77 | 60 | 56 |
| Asbest | - | 1 | 2 | 8 | 12 | 14 |
| Aluminium | 3 | - | - | - | - | - |
| Bleifluorid | 88 | - | - | - | - | - |
| Lithiumfluorid | 9 | - | - | - | - | - |

**Tabelle 3**

| Verhältnis der Komponenten in Masse-% im Separator | | | | | | | | | | |
|---|---|---|---|---|---|---|---|---|---|---|
| Bezeichnung der Komponenten | Stand der Technik Russ. Pat. N2018782 | Beispiele für die Zusammensetzung des Separators in dem erfindungsgemäßen Generator | | | | | | | | |
| | | 1 | 2 | 3 | 4 | 5 | 6 | 7 | 8 | 9 |
| Asbest | 100 | 1 | 3 | 12 | 20 | 35 | 10 | 10 | 10 | 10 |
| Lithiumfluorid oder Erdalkalifluorid oder Fluoridgemisch | - | 99 | 97 | 88 | 80 | 75 | 88 | 60 | 30 | 20 |
| Zirkoniumdioxid | - | - | - | - | - | - | 2 | 30 | 60 | 70 |

Der Vergleich der erfindungsgemäßen Vorrichtung und der bekannten wurde durchgeführt, indem man die Elektroden zum Beispiel mit einer glühenden chromfreien Spirale entflammte, wobei die Spannung (Stromstärke pro Belastung 4 Ohm) und die Dauer mit Hilfe eines Oszillographen bei Raumtemperatur gemessen wurden. Die Versuchsergebnisse sind in Tabelle 4 angegeben. Dort werden die Charakteristiken der erfindungsgemäßen Vorrichtung mit der besten Zusammensetzung der Anode (Variante N3 und N7), der Kathode (Variant N3) und des Separators (Variante N3 und N7) im Vergleich zur bekannten Vorrichtung angeführt. Aus dieser Tabelle geht hervor, daß die erfindungsgemäße Vorrichtung die bekannte in allen Parametern übertrifft.

Eine Batterie aus zwei und mehreren der erfindungsgemäßen Vorrichtungen gewährleistet die Entstehung von Strom in 0,05-0,1 s nach Gabe des Startimpulses (alle Anoden und Kathodenladungen (Elektroden) entzünden sich, verbrennen und entwickeln Strom).

Die maximale Stromstärke erhält man in 0,20 ± 0,05 s vom Beginn der Arbeit bei einer allgemeinen Prozeßdauer von nicht weniger als 6-12 s.

**Tabelle 4**

| Ergebnis der Prüfung der erfindungsgemäßen und der bekannten Vorrichtung | | | | | | | | |
|---|---|---|---|---|---|---|---|---|
| Eigenschaften der erfindungsgemäßen Vorrichtung | Stand der Technik Russ. Pat. N2018782 | Vergleichsbeispiel | Nummer der erfindungsgemäßen Vorrichtung mit Anoden, Kathoden und Separatoren | | | | | Vergleichsbeispiel |
| | | 1 | 2 | 3 | 4 | 5 | 6 | 7 |
| Verhältnis der maximalen Größe der Elemente zu ihrer Dicke | 2,2 | 15 | 20 | 50 | 75 | 100 | 130 | 135 |
| Spannung, V bei einer Belastung von 4 Ohm | 1,2 | 0,6 | 1,2 | 1,3 | 1,2 | 1,2 | 1,3 | 1,0 |
| Zeit zum Erreichen der maximalen Stromstärke, s | 0,6±0,1 | 0,20±0,05 | | | | | | |
| Arbeitszeit, s | | 0,5 | 2 | 6 | 12 | 10 | 8 | 0,8 |
| Betriebsfähigkeit der Batterie | nicht arbeitsfähig | Die Spannung und die Stromstärke steigen proportional zur Zahl der Zellen | | | | | | |

Die Herstellung der Anode, der Kathode und des Separators erfordert keinerlei neue Herstellungsweisen und Umstellung bestehender Anlagen. Die erfindungsgemäß eingesetzten Bestandteile werden in der Pyrotechnik in umfangreichem Maße eingesetzt, wobei bei der Herstellung keine umweltbelastenden Produkte entstehen.

Die bisher nicht bekannte Summe an Eigenschaften von pyrotechnischen Generatoren und Batterien ermöglicht ein zuverlässiges Funktionieren. Die wird bedingt durch die Konstruktion der Vorrichtung sowie seiner Elektroden, seiner Ausmaße und seiner Anordnung. Außerdem gewährleistet die erfindungsgemäße Vorrichtung eine Garantie von 5-10 Jahren bei einer Lagerungs- und Anwendungstemperatur von ±50°C.

## Patentansprüche

1. Pyrotechnischer elektrischer Generator aus einer Anode und einer von dieser durch einen Separator getrennten Kathode, wobei die Anode aus einer pyrotechnischen Ladung mit einem Überschuß an Brennstoff und die Kathode aus einer pyrotechnischen Ladung mit einem Überschuß an Oxidationsmittel besteht, dadurch gekennzeichnet, daß Anode, Kathode und Separator als Bindemittel Asbest enthalten und Anode, Kathode und Separator jeweils ein Verhältnis von maximaler Größe zur Dicke von 20 bis 130 aufweisen, wobei der Brennstoff in der Anode und in der Kathode Zirkonium ist, und der Separator aus Lithiumfluorid, Erdalkalifluorid oder deren Gemisch besteht.

2. Pyrotechnischer elektrischer Generator nach Anspruch 1, dadurch gekennzeichnet, daß die Anode folgende Bestandteile in den angegebenen Anteilen in Masse-% enthält:
| | |
|---|---|
| Zirkonium | 37-83 |
| Bariumchromat oder Kupferoxid | 15-51 |
| Asbest | 2-12, |
daß die Kathode folgende Bestandteile in den angegebenen Anteilen in Masse-% enthält:
| | |
|---|---|
| Zirkonium | 3-28 |
| Kupferoxid | 60-95 |
| Asbest | 2-12, |
und daß der Separator folgende Bestandteile in den angegebenen Anteilen in Masse-% enthält:
| | |
|---|---|
| Asbest | 3-20 |
| Lithium- oder Erdalkalifluorid oder deren Gemisch | 80-97. |

3. Pyrotechnischer Generator nach Anspruch 2, dadurch gekennzeichnet, daß der Separator zusätzlich Zirkoniumoxid in einer Menge von bis zu 60 Masse-% bezogen auf die Gesamtmasse enthält, wobei das Massenverhältnis von Asbest zu Lithium- oder Erdalkalifluorid dem in Anspruch 2 angegebenen Prozentanteilverhältnis entspricht.
